# EUROPÄISCHE PATENTSCHRIFT

(11) **EP 3 999 818 B1**
(45) Veröffentlichungstag und Bekanntmachung des Hinweises auf die Patenterteilung: **22.11.2023**
(21) Anmeldenummer: 20737088.3
(22) Anmeldetag: 24.06.2020
(51) Int. Cl.: G01F 23/24, G01F 23/80, F16H 57/04

(54) **VERFAHREN ZUR ÜBERWACHUNG EINES GETRIEBES MIT EINEM TEMPERATURSENSOR UND GETRIEBE**
METHOD FOR MONITORING A GEARBOX USING A TEMPERATURE SENSOR, AND GEARBOX
PROCÉDÉ POUR SURVEILLER UNE TRANSMISSION AU MOYEN D'UN CAPTEUR DE TEMPÉRATURE ET TRANSMISSION

(30) Priorität: 18.07.2019 DE 102019004980
(43) Veröffentlichungstag der Anmeldung: 25.05.2022
(73) Patentinhaber: SEW-EURODRIVE GmbH & Co. KG, 76646 Bruchsal (DE)
(72) Erfinder: GÖTZMANN, Thorsten, 68789 St. Leon-Rot (DE); SCHUMACHER, Meinhard, 74889 Sinsheim (DE)
(86) Internationale Anmeldenummer: PCT/EP2020/025298
(87) Internationale Veröffentlichungsnummer: WO 2021/008724

(56) Entgegenhaltungen:
- DE-A1- 10 129 072
- US-A1- 2004 124 808
- US-A1- 2015 308 878
- US-B1- 6 425 293

## Beschreibung

Die Erfindung betrifft ein Verfahren zur Überwachung eines Getriebes mit einem Temperatursensor und ein Getriebe.

Es ist allgemein bekannt, dass ein Getriebe mit Schmieröl befüllt ist.

**Aus der** DE 101 29 072 A1 **ist ein Verfahren zum Bestimmen des Ölfüllstandes bekannt.**

**Aus der** US 2009 / 0 240 390 A1 **ist ein Verfahren für Komponenten-Beobachtung bekannt.**

**Aus der** DE 101 42 751 A1 **ist eine Vorrichtung bei einem Antrieb bekannt.**

**Aus der** US 2015 / 308878 A1 **ist ein Ölüberwachungssystem bekannt.**

**Aus der** US 6 425 293 B1 **ist ein Sensorstecker bekannt.**

**Aus der** US 2004 / 124808 A1 **ist ein Motorsteuerungssystem bekannt.**

Der Erfindung liegt daher die Aufgabe zugrunde, die Sicherheit in einer Anlage mit Getrieben weiterzubilden.

Erfindungsgemäß wird die Aufgabe bei dem Verfahren nach den in Anspruch 1 und bei dem System nach den in Anspruch 5 angegebenen Merkmalen gelöst.

Wichtige Merkmale der Erfindung bei dem Verfahren zur Überwachung eines Getriebes mit einem Temperatursensor sind, dass
**in einem ersten Verfahrensschritt** das Getriebe zumindest teilweise mit Schmieröl befüllt wird,
so, dass der Temperatursensor im Schmieröl angeordnet ist,
insbesondere wobei im insbesondere von einem Gehäuse des Getriebes umgebenen Innenraum des Getriebes der Temperatursensor innerhalb des Schmieröls, insbesondere unterhalb des Ölpegels des Schmieröls, angeordnet ist,
wobei dem Getriebe, insbesondere der eintreibenden Welle des Getriebes, eine konstante Leistung zugeführt wird,
wobei ein erster Verlauf der Temperatur erfasst und abgespeichert wird, insbesondere über eine Zeitspanne, insbesondere die mindestens dem Dreifachen der auf die Erwärmung des Getriebes bezogenen Zeitkonstanten entspricht,
wobei **in einem zweiten**, insbesondere zeitlich dem ersten Verfahrensschritt nachfolgenden, Verfahrensschritt ein zweiter Verlauf der Temperatur erfasst und abgespeichert wird, insbesondere über eine gleich lange Zeitspanne,
wobei **in einem dritten**, insbesondere zeitlich dem zweiten Verfahrensschritt nachfolgenden, Verfahrensschritt bestimmt wird, ob der zweite Verlauf ein zulässiges Maß an Abweichung vom ersten Verlauf überschreitet.

Von Vorteil ist dabei, dass am Temperaturverlauf ein Ölverlust erkennbar ist. Denn sobald der Ölverlust derart groß ist, dass der Sensor oberhalb des Ölpegels angeordnet ist, ist ein veränderter Temperaturverlauf beim Zuführen einer konstanten Leistung an das zuvor abgekühlte Getriebe detektierbar. Erfindungsgemäß wird aus dem veränderten Temperaturverlauf auf den Ölverlust geschlossen und vorzugsweise eine Warninformation angezeigt oder herausgegeben.

Bei einer vorteilhaften Ausgestaltung wird im ersten Verfahrensschritt die beim ersten Verlauf stationär sich einstellende Temperatur, also erste stationäre Temperatur, bestimmt,
wobei im zweiten Verfahrensschritt die beim zweiten Verlauf stationär sich einstellende Temperatur, also zweite stationäre Temperatur, bestimmt wird,
wobei im dritten Verfahrensschritt die Messwerte des zweiten Verlaufs **um die Differenz zwischen der ersten und zweiten stationär sich einstellenden** Temperatur vermindert werden und danach bestimmt wird, ob der um die Differenz verminderte zweite Verlauf ein zulässiges Maß an Abweichung vom ersten Verlauf überschreitet. Von Vorteil ist dabei, dass die Umgebungstemperatur berücksichtigbar ist.

Bei einer vorteilhaften Ausgestaltung wird zu jedem Zeitpunkt die Temperaturdifferenz zwischen der jeweiligen Temperatur des ersten Verlaufs und der Temperatur des zweiten Verlaufs bestimmt und aus den so bestimmten Temperaturdifferenzen wird ein Maß an Abweichung zwischen dem zweiten Verlauf und dem ersten Verlauf bestimmt,
wobei eine Warninformation angezeigt und/oder weitergeleitet wird, wenn das Maß unzulässig groß wird, insbesondere also einen Schwellwert überschreitet. Von Vorteil ist dabei, dass die Bestimmung sehr einfach ausführbar ist.

Bei einer vorteilhaften Ausgestaltung wird als Maß an Abweichung die Summe oder die Wurzel aus der Summe der Quadrate der Temperaturdifferenzen oder die Summe der Beträge der Temperaturdifferenzen bestimmt. Von Vorteil ist dabei, dass eine einfache und schnelle Bestimmung ermöglicht ist.

Wichtige Merkmale der Erfindung sind in dem Produktanspruch 5 beschrieben.

Von Vorteil ist dabei, dass die Auswertung der Signale des Sensors nahe bei der Erfassung ausführbar ist und die Ergebnisse der Auswertung, insbesondere das Erkennen eines Ölverlustes schnell und direkt in eine Aktion umwandelbar ist, insbesondere beispielsweise in ein sicherheitsgerichtetes Anhalten des Antriebs.

Weitere Vorteile ergeben sich aus den Unteransprüchen.

Die Erfindung wird nun anhand von schematischen Abbildungen näher erläutert:
In der Figur 1 ist ein beispielhafter mehrtägiger Temperaturverlauf eines Getriebes dargestellt, das nachts abgeschaltet wird und tagsüber betrieben wird.
In der Figur 2 sind ein erster zeitlicher Temperaturverlauf 1 bei erstem Ölstand und ein zweiter zeitlicher Temperaturverlauf **2** bei erstem Ölstand **gezeigt.**

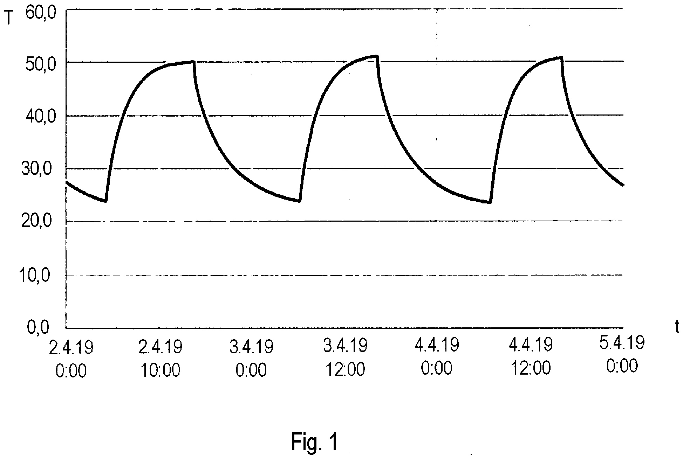

Wie in der Figur 1 gezeigt, verändert sich die Temperatur beim Betreiben des Getriebes. Beispielsweise wird das Getriebe nachts nicht betrieben, so dass die Temperatur des Getriebes absinkt. Das Betreiben während des Tags erhöht hingegen die Temperatur.

Das Getriebe ist zumindest teilweise mit Schmieröl befüllt. Ein Temperatursensor ist im Innern des Getriebes angeordnet, insbesondere unterhalb des vorgesehenen Ölpegels.

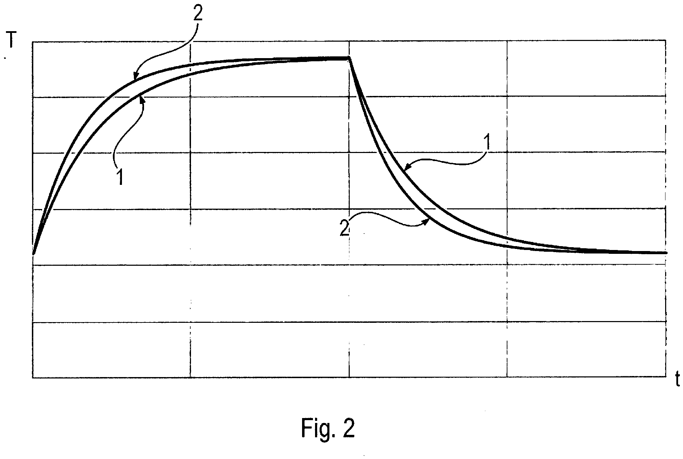

Zu diesem Ölpegel gehört ein charakteristischer Temperaturverlauf, wie in Figur 2 als Temperaturverlauf 1 gezeigt. Denn bei zeitlich konstanter Drehzahl der Abtriebswelle des Getriebes und bei vom Getriebe an der abtreibenden Welle abgegebenem, zeitlich konstantem Drehmoment steigt die Temperatur gemäß einem Temperaturverlauf 1 an, welcher wesentlich bestimmt ist durch die Masse des im Innenraum des Getriebes eingefüllten Schmieröls.

Denn bei einer geringeren Menge an eingefülltem Schmieröl ergibt sich wegen der geringeren Wärmekapazität ein anfangs steilerer Temperaturverlauf 2, insbesondere Temperaturanstieg. Außerdem ist der Temperatursensor gegebenenfalls oberhalb des Ölpegels angeordnet, so dass eine schnellere Abkühlung im Bereich des Sensors Auswirkungen hat.

Die stationär sich einstellende Temperatur ist aber unabhängig von der in das Getriebe eingefüllten Ölmenge gleich. Denn diese stationär sich einstellendes Temperatur hängt wesentlich ab von dem Wärmeübergangswiderstand vom Innenraum zur Umgebung hin.

Dabei wird bei allen Temperaturverläufen der gleich große und gleichartige Antriebsleistungsverlauf zugrunde gelegt und/oder der gleich große und gleichartige, an der abtreibenden Welle des Getriebes abgegebene Leistungsverlauf.

Somit ist also am Temperaturverlauf erkennbar, ob die Ölmenge vom vorgesehenen Wert unzulässig abweicht und/oder ob der Ölpegel oberhalb oder unterhalb des Temperatursensors angeordnet ist.

Das Getriebe wird von einem Elektromotor angetrieben, dessen ans Getriebe übertragene Leistung messbar ist. Hierzu wird vorzugsweise aus dem erfassten Motorstrom und der erfassten Motorspannung die Leistung des Elektromotors bestimmt.

Erfindungsgemäß wird zu einem ersten Zeitpunkt, insbesondere bei Inbetriebnahme, der Verlauf der vom Sensor erfassten Temperatur erfasst, wobei die Leistung des Elektromotors einen konstanten Wert aufweist.

Die stationär sich einstellende Temperatur wird als erste stationäre Temperatur bezeichnet und aus dem Verlauf bestimmt, wenn die Zeitdauer des Zuführens der konstanten Leistung genügend groß ist, insbesondere mindestens dem Dreifachen der Zeitkonstanten bei der Erwärmung entspricht.

Zu einem späteren Zeitpunkt, also im Betrieb des Getriebes, wird wiederum der Verlauf der vom Sensor erfassten Temperatur bestimmt und daraus die als zweite stationäre Temperatur bezeichnet und aus dem Verlauf bestimmt bei möglichst gleich langer Zeitdauer des Zuführens der konstanten Leistung.

Die Messwerte des zweiten Verlaufs werden um die Differenz zwischen der ersten und zweiten Temperatur vermindert, so dass die Umgebungstemperatur keinen Einfluss auf die weitere Auswertung der Verläufe hat.

Danach wird zu jedem Zeitpunkt die Temperaturdifferenz zwischen der ersten und zweiten Temperatur bestimmt und daraus ein Maß an Abweichung voneinander bestimmt. Hierzu ist beispielsweise die Summe der Quadrate der Temperaturdifferenzen oder die Summe der Beträge der Temperaturdifferenzen bestimmt. Wenn die Summe oder die Wurzel aus der Summe einen zulässigen Mindestwert, also ein zulässiges Maß an Abweichung, überscheitet, wird eine Warnung herausgegeben, also eine Warninformation angezeigt und/oder an einen übergeordneten Rechner gemeldet, da der Ölpegel bei Erfassung des zweiten Verlaufs insbesondere mit hoher Wahrscheinlichkeit unterhalb des Sensors liegt.

### Bezugszeichenliste

1 zeitlicher Temperaturverlauf bei erstem Ölstand
2 zeitlicher Temperaturverlauf bei zweitem Ölstand

## Patentansprüche

1. Verfahren zur Überwachung eines Getriebes mit einem Temperatursensor,
wobei **in einem ersten Verfahrensschritt** das Getriebe zumindest teilweise mit Schmieröl befüllt wird,
so, dass der Temperatursensor im Schmieröl angeordnet ist,
wobei im von einem Gehäuse des Getriebes umgebenen Innenraum des Getriebes der Temperatursensor innerhalb des Schmieröls, **nämlich** unterhalb des Ölpeaels des Schmieröls angeordnet ist,
wobei dem Getriebe, insbesondere der eintreibenden Welle des Getriebes, eine konstante Leistung zugeführt wird,
wobei ein erster Verlauf (1) der Temperatur erfasst und abgespeichert wird, insbesondere über eine Zeitspanne, insbesondere die mindestens dem Dreifachen der auf die Erwärmung des Getriebes bezogenen Zeitkonstanten entspricht,
wobei **in einem zweiten**, insbesondere zeitlich dem ersten Verfahrensschritt nachfolgenden, Verfahrensschritt ein zweiter Verlauf (2) der Temperatur erfasst und abgespeichert wird, insbesondere über eine gleich lange Zeitspanne,
wobei **in einem dritten**, insbesondere zeitlich dem zweiten Verfahrensschritt nachfolgenden, Verfahrensschritt bestimmt wird, ob der zweite Verlauf (2) ein zulässiges Maß an Abweichung vom ersten Verlauf (1) überschreitet,
**dadurch gekennzeichnet, dass**
aus einem veränderten Temperaturverlauf auf einen Ölverlust geschlossen wird,
wobei der veränderte Temperaturverlauf detektierbar ist, sobald der Ölverlust derart groß ist, dass der Sensor oberhalb des Ölpegels angeordnet ist.

2. Verfahren nach Anspruch 1,
**dadurch gekennzeichnet, dass**
im ersten Verfahrensschritt die beim ersten Verlauf (1) stationär sich einstellende Temperatur, also erste stationäre Temperatur, bestimmt wird,
wobei im zweiten Verfahrensschritt die beim zweiten Verlauf (2) stationär sich einstellende Temperatur, also zweite stationäre Temperatur, bestimmt wird,
wobei im dritten Verfahrensschritt die Messwerte des zweiten Verlaufs (2) um die Differenz zwischen der ersten und zweiten **stationär sich einstellenden** Temperatur, **also um die Differenz zwischen der ersten und der zweiten stationären Temperatur,** vermindert werden und danach bestimmt wird, ob der um die Differenz verminderte zweite Verlauf (2) ein zulässiges Maß an Abweichung vom ersten Verlauf (1) überschreitet.

3. Verfahren nach einem der vorangegangenen Ansprüche,
**dadurch gekennzeichnet, dass**
zu jedem Zeitpunkt die Temperaturdifferenz zwischen der jeweiligen Temperatur des ersten Verlaufs (1) und der Temperatur des zweiten Verlaufs (2) bestimmt wird und aus den so bestimmten Temperaturdifferenzen ein Maß an Abweichung zwischen dem zweiten Verlauf (2) und dem ersten Verlauf (1) bestimmt wird,
wobei eine Warninformation angezeigt und/oder weitergeleitet wird, wenn das Maß unzulässig groß wird, insbesondere also einen Schwellwert überschreitet.

4. Verfahren nach einem der vorangegangenen Ansprüche,
**dadurch gekennzeichnet, dass**
als Maß an Abweichung die Summe oder die Wurzel aus der Summe der Quadrate der Temperaturdifferenzen oder die Summe der Beträge der Temperaturdifferenzen bestimmt wird.

5. System mit einem Getriebe und einem Elektromotor, wobei
das Getriebe von dem Elektromotor angetrieben wird, wobei in dem Getriebe ein Temperatursensor angeordnet ist,
wobei ein Mittel zur Erfassung des Motorstroms und der Motorspannung des Elektromotors in einem den Elektromotor speisenden Wechselrichter oder Umrichter angeordnet ist,
wobei zumindest eine Signalleitung des Temperatursensors zur Signalelektronik des Wechselrichters führt und
die Signalelektronik als Auswerteeinheit für die Signale des Temperatursensors fungiert,
wobei die besagte Signalelektronik zur Durchführung des Verfahrens nach einem der vorangegangenen Ansprüche konfiguriert ist,
und der Temperatursensor im Getriebe so angeordnet ist, dass er
**vor einem Ölverlust oberhalb und danach unterhalb des Ölpegels des Getriebes angeordnet ist.**

## Claims

1. A method for monitoring a gear unit having a temperature sensor,
wherein in a first method step the gear unit is at least partially filled with lubricating oil,
such that the temperature sensor is arranged in the lubricating oil,
wherein, in the interior of the gear unit which is surrounded by a housing of the gear unit, the temperature sensor is arranged within the lubricating oil, namely below the oil level of the lubricating oil,
wherein
a constant power is supplied to the gear unit, in particular the input shaft of the gear unit,
wherein a first profile (1) of the temperature is acquired and stored, in particular over a time interval, in particular one which corresponds to at least three times the time constant related to the heating of the gear unit,
wherein in a second method step, in particular one which chronologically succeeds the first method step, a second profile (2) of the temperature is acquired and stored, in particular over a time interval of the same length,
wherein in a third method step, in particular which chronologically succeeds the second method step, it being determined whether the second profile (2) exceeds a permissible extent of deviation from the first profile (1),
**characterised in that**
it is concluded from a changed temperature profile that there has been an oil loss,
the changed temperature profile being detectable as soon as the oil loss is so great that the sensor is arranged above the oil level.

2. A method according to claim 1,
**characterised in that**
in the first method step the temperature which is in a steady state in the case of the first profile (1), i.e. first steady-state temperature, is determined,
in the second method step the temperature which is in a steady state in the case of the second profile (2), i.e. second steady-state temperature, being determined,
in the third method step the measured values of the second profile (2) being reduced by the difference between the first and second temperatures which are in a steady state, i.e. by the difference between the first and the second steady-state temperature, and thereafter it being determined whether the second profile (2) which has been reduced by the difference exceeds a permissible extent of deviation from the first profile (1).

3. A method according to one of the preceding claims,
**characterised in that**
at any time the temperature difference between the respective temperature of the first profile (1) and the temperature of the second profile (2) is determined, and an extent of deviation between the second profile (2) and the first profile (1) is determined from the temperature differences thus determined,
with warning information being displayed and/or relayed if the extent becomes impermissibly great, in particular therefore exceeds a threshold value.

4. A method according to one of the preceding claims,
**characterised in that**
the sum or the root of the sum of the squares of the temperature differences or the sum of the amounts of the temperature differences is determined as the extent of deviation.

5. A system having a gear unit and an electric motor,
wherein
the gear unit is driven by the electric motor, wherein a temperature sensor is arranged in the gear unit,
wherein a means for acquiring the motor current and the motor voltage of the electric motor is arranged in an inverter or converter which feeds the electric motor,
wherein at least one signal line of the temperature sensor leads to the signal electronics of the inverter and the signal electronics function as an evaluation unit for the signals of the temperature sensor,
wherein the said signal electronics are configured to carry out the method according to one of the preceding claims,
and the temperature sensor is arranged in the gear unit such that prior to any oil loss it is arranged above, and thereafter below, the oil level of the gear unit.

## Revendications

1. Procédé de surveillance d'une transmission à l'aide d'un capteur de température,
ladite transmission étant au moins partiellement emplie d'huile de lubrification, au cours d'une première étape opératoire,
de façon telle que ledit capteur de température soit disposé dans l'huile de lubrification, ledit capteur de température étant logé à l'intérieur de l'huile de lubrification, plus précisément au-dessous du niveau de ladite huile de lubrification dans l'espace interne de la transmission entouré par un carter de ladite transmission,
une puissance constante étant délivrée à la transmission, en particulier à l'arbre d'entrée de ladite transmission,
un premier profil (1) de la température étant saisi et mémorisé, notamment durant une période qui correspond, en particulier, au moins au triple de la constante de temps relative à l'échauffement de la transmission,
sachant qu'un second profil (2) de la température est saisi et mémorisé, en particulier durant une période de longueur identique, lors d'une deuxième étape opératoire succédant notamment, dans le temps, à la première étape opératoire,
sachant que, lors d'une troisième étape opératoire succédant notamment, dans le temps, à ladite deuxième étape opératoire, il est déterminé si ledit second profil (2) excède un degré d'écart admissible par rapport au premier profil (1),
**caractérisé par le fait**
**qu'**une perte d'huile est inférée sur la base d'un profil de température modifié,
lequel profil de température modifié peut être détecté dès que ladite perte d'huile revêt une ampleur telle que le capteur se trouve au-dessus du niveau d'huile.

2. Procédé selon la revendication 1,
**caractérisé par le fait que**
la température s'instaurant de manière stationnaire dans le premier profil (1), à savoir la première température stationnaire, est déterminée au cours de la première étape opératoire,
la température s'instaurant de manière stationnaire dans le second profil (2), à savoir la seconde température stationnaire, étant déterminée au cours de la deuxième étape opératoire,
sachant que, lors de la troisième étape opératoire, les valeurs mesurées dudit second profil (2) sont diminuées de la différence entre les première et seconde températures s'instaurant de manière stationnaire, c'est-à-dire de la différence entre les première et seconde températures stationnaires, après quoi il est déterminé si ledit second profil (2), diminué de ladite différence, excède un degré d'écart admissible par rapport au premier profil (1).

3. Procédé selon l'une des revendications précédentes,
**caractérisé par le fait que**
la différence, entre la température respective du premier profil (1) et la température du second profil (2), est déterminée à chaque instant et un degré d'écart, entre ledit second profil (2) et ledit premier profil (1), est déterminé sur la base des différences de température ainsi déterminées,
une information d'alerte étant affichée et/ou transmise si ledit degré devient intolérablement grand, c'est-à-dire s'il excède notamment une valeur de seuil.

4. Procédé selon l'une des revendications précédentes,
**caractérisé par le fait que**
la somme, ou la racine de la somme des carrés des différences de température, voire la somme des valeurs desdites différences de température, est déterminée en tant que degré d'écart.

5. Système comprenant une transmission et un moteur électrique,
la transmission étant entraînée par ledit moteur électrique, un capteur de température étant implanté dans ladite transmission,
un moyen, dévolu à la détection du courant et de la tension du moteur électrique, étant intégré dans un onduleur ou un convertisseur alimentant ledit moteur électrique,
sachant qu'au moins une ligne de signaux du capteur de température gagne l'électronique de signaux dudit onduleur, et que ladite électronique de signaux remplit une fonction d'unité d'évaluation dédiée aux signaux dudit capteur de température,
l'électronique de signaux précitée étant configurée pour la mise en oeuvre du procédé conforme à l'une des revendications précédentes
et ledit capteur de température étant disposé, dans la transmission, de telle sorte qu'il soit situé au-dessus du niveau d'huile de ladite transmission, avant une perte d'huile, et au-dessous dudit niveau à un stade ultérieur.
